# EUROPEAN PATENT APPLICATION

(11) **EP 2 190 046 A1**
(43) Date of publication of application: **26.05.2010**
(21) Application number: 08790264.9
(22) Date of filing: 25.07.2008
(51) Int. Cl.: H01M 4/42, C22C 18/00, C22C 18/04, H01M 4/50, H01M 4/52, H01M 4/62, H01M 6/08

(54) **ALKALINE DRY CELL**

(30) Priority: 10.09.2007 JP 2007233969
(71) Applicant: Panasonic Corporation, Kadoma-shi Osaka 571-8501 (JP)
(72) Inventor: KATO Fumio c/o Panasonic Corporation IPROC, 2-1-61, Shiromi, Chuo-ku Osaka 540-6207 (JP); SHIMAMURA Harunari c/o Panasonic Corporation IPROC, 2-1-61, Shiromi, Chuo-ku Osaka 540-6207 (JP); NUNOME Jun c/o Panasonic Corporation IPROC, 2-1-61, Shiromi, Chuo-ku Osaka 540-6207 (JP); BITO Yasuhiko c/o Panasonic Corporation IPROC, 2-1-61, Shiromi, Chuo-ku Osaka 540-6207 (JP)
(74) Representative: Grünecker, Kinkeldey, Stockmair & Schwanhäusser Anwaltssozietät
(86) International application number: PCT/JP2008/002000
(87) International publication number: WO 2009/034673

(57) **Abstract**

An alkaline battery includes: a positive electrode 3 including a positive electrode active material; a negative electrode 6 including a negative electrode active material; a separator 4; and an alkaline electrolyte. The negative electrode active material includes zinc alloy powder containing calcium and bismuth. The zinc alloy powder contains from 10% to 60%, both inclusive, by weight, of calcium with respect to bismuth, from 0.004% to 0.02%, both inclusive, by weight, of bismuth, and at least 11 %, by weight, of particles with particle sizes of 75 µm or less. With this configuration, high-power pulse discharge performance of the alkaline battery can be sufficiently enhanced without problems such as a rapid temperature rise in a short circuit and leakage.

## Description

### TECHNICAL FIELD

The present invention relates to alkaline batteries.

### BACKGROUND ART

Alkaline-manganese batteries including manganese dioxide for positive electrodes, zinc for negative electrodes, and alkaline solutions for electrolytes, are versatile, and can be manufactured at low cost. For this reason, the alkaline-manganese batteries are widely used as power supplies for various devices. Further, to cope with recent digitization of the devices, nickel-containing alkaline batteries exhibiting enhanced power characteristics by adding nickel oxyhydroxide to the positive electrodes are rapidly becoming widespread.

In an alkaline battery, irregularly shaped zinc powder formed with, for example, a gas atomizing method is used as a negative electrode active material. The zinc powder readily corrodes in an alkaline electrolyte to generate hydrogen gas, thereby increasing the internal pressure of the battery and causing leakage. Accordingly, the reliability of the alkaline battery with respect to leakage resistance can be greatly enhanced by reducing corrosion of zinc powder in the alkaline electrolyte.

In the past, an anti-corrosion technique in which mercury was added to the negative electrode to form amalgam in the surface of zinc powder in order to increase an overvoltage for hydrogen generation, was employed. However, environmental concerns have led to a change to mercury-free alkaline batteries in about 1980 to 1990. A core technology that enabled a mercury-free structure is a technique of using corrosion-resistant zinc alloy powder containing a small amount of at least one of indium, aluminium, bismuth, and calcium (see, for example, Patent Document 1). Components of such corrosion-resistant zinc alloy powder have been technically advanced by, for example, a technique of optimizing either the compositions of bismuth, indium, and calcium contained in the zinc alloy powder and the amount of iron as an accompanying impurity, or the compositions of calcium, bismuth, and aluminium contained in the zinc alloy powder and the amount of iron as an accompanying impurity, so as to reduce generation of hydrogen gas (see, for example, PATENT DOCUMENT 2) and a technique of controlling the amounts of aluminium and calcium contained in the zinc alloy powder so as to reduce a short circuit in discharge of a battery (see, for example, PATENT DOCUMENTS 3 and 4).

### CITATION LIST

### PATENT DOCUMENT

PATENT DOCUMENT 1: Japanese Patent Publication No. H3-71737
PATENT DOCUMENT 2: Japanese Patent Publication No. H5-86430
PATENT DOCUMENT 3: Japanese Translation of PCT International Application No. H8-510010
PATENT DOCUMENT 4: Japanese Translation of PCT International Application No. H10-504679
PATENT DOCUMENT 5: Japanese Translation of PCT International Application No. 2001-512284
PATENT DOCUMENT 6: Japanese Patent Publication No. 2002-270164

### SUMMARY OF THE INVENTION

### TECHNICAL PROBLEM

All the zinc alloy powders shown in PATENT DOCUMENTS 1-4, however, contain relatively large amount of bismuth and/or aluminium, and these anti-corrosive elements increase polarization of negative electrodes during discharge. Accordingly, it is difficult for alkaline batteries shown in PATENT DOCUMENTS 1-4, i.e., batteries containing zinc alloy powder as negative electrode active materials, to obtain sufficient performance in high-power pulse discharge for digital still cameras, which are in high demand in recent years.

To enhance discharge performance for high-power pulses, it is proposed to increase the fine-powder percentage of particles with particle sizes of 75 µm or less (i.e., particles of -200 mesh size) in bismuth-indium-based zinc alloy powder so as to increase the reaction area of zinc (see, for example, PATENT DOCUMENT 5). It is also proposed to increase the fine-powder percentage of particles with particle sizes of 75 µm or less to 20% to 30%, by weight, in aluminium-bismuth-indium-based zinc alloy powder (see, for example, PATENT DOCUMENT 6). Such techniques of increasing the fine-powder percentage are capable of increasing high-power pulse discharge performance, but the degree of this increase is not sufficient, and leaves room for improvement.

In addition, an increased reaction area of zinc obtained by increasing the fine-powder percentage in zinc alloy powder might cause problems such as a rapid temperature rise occurring when a battery is short-circuited (i.e., when an external short circuit occurs) and leakage due to an increased amount of corrosive gas. Such problems are conspicuous especially in nickel-containing alkaline batteries.

Further, most examples of zinc alloy powder shown in PATENT DOCUMENTS 1-6 contain 0.02% to 0.1%, by weight, of indium serving as anti-corrosive elements. However, a need for indium for use as transparent conductive films in liquid-crystal displays has been growing in recent years, leading to a soaring price of indium. In view of this, to achieve cost reduction, it is important to obtain zinc alloy powder containing a reduced amount of indium, while ensuring various properties.

It is therefore an object of the present invention to sufficiently enhance high-power pulse discharge performance of an alkaline battery without problems such as a rapid temperature rise occurring in a short circuit of the battery and leakage.

### SOLUTION TO THE PROBLEM

Bismuth in zinc alloy powder exists in a metal state especially in the boundary between particles, and prevents corrosion in the particle boundary. Accordingly, bismuth plays an important role in preventing leakage. However, bismuth might increase the internal resistance of batteries to cause degradation of high-power pulse discharge performance and a rapid temperature rise in the case of a short circuit. These problems are considered to arise because bismuth is a "semimetal" having low electron conductivity. For this reason, in the case of using zinc alloy powder containing bismuth, it is necessary to reduce the internal resistance of batteries with some measures.

To increase the electron conductivity of bismuth, which is a "semimetal," the inventors of the present invention focused on calcium capable of being added to bismuth (i.e., calcium with which bismuth can be doped), and conducted intensive studies, to find that the internal resistance of batteries can be effectively reduced by setting the Ca/Bi ratio of the calcium weight with respect to the bismuth weight in a given range (specifically, in the range from 0.1 to 0.6, both inclusive) in zinc alloy powder containing calcium in addition to bismuth. This effect is considered to be obtained by increasing the electron conductivity of bismuth by adding an appropriate amount of calcium to bismuth in the zinc alloy.

Specifically, to achieve the foregoing object, an alkaline battery according to the present invention includes: a positive electrode including a positive electrode active material; a negative electrode including a negative electrode active material; a separator; and an alkaline electrolyte, wherein the negative electrode active material includes zinc alloy powder containing calcium and bismuth, the zinc alloy powder contains from 10% to 60%, both inclusive, by weight, of calcium with respect to bismuth, from 0.004% to 0.02%, both inclusive, by weight, of bismuth, and at least 11%, by weight, of particles with particle sizes of 75 µm or less.

In the alkaline battery, zinc alloy powder contains from 10% to 60%, both inclusive, by weight, of calcium with respect to bismuth, i.e., the Ca/Bi ratio of the calcium weight with respect to the bismuth weight in zinc alloy powder is in the range from 0.1 to 0.6, both inclusive. Thus, calcium is added to bismuth to increase electron conductivity of bismuth, thereby reducing the internal resistance of the battery. Accordingly, high-power pulse discharge performance can be enhanced, and a rapid temperature rise occurring in a short circuit can be reduced.

In addition, since the zinc alloy powder contains from 0.004% to 0.02%, both inclusive, by weight, of bismuth, corrosion resistance of the zinc alloy powder can be increased, thereby reducing corrosion of the zinc alloy powder. Accordingly, it is possible to reduce leakage due to generation of corrosive gas. Further, since the zinc alloy powder contains at least 11 %, by weight, of particles with particle sizes of 75 µm or less, high-power pulse discharge performance can be further enhanced.

Therefore, it is possible to provide an alkaline battery exhibiting sufficiently high high-power pulse discharge performance and showing reduction of a rapid temperature rise occurring in a short circuit and leakage. That is, it is possible to provide an alkaline battery exhibiting both high performance and high reliability.

Moreover, the zinc alloy powder has high corrosion resistance even if indium is contained. Therefore, an increase in cost due to the presence of indium can be avoided, thereby advantageously achieving cost reduction.

In the alkaline battery, the zinc alloy powder preferably includes from 20% to 40%, both inclusive, by weight, of calcium with respect to bismuth.

Then, calcium can be effectively added to bismuth without precipitation of calcium in a portion containing no bismuth.

In the alkaline battery, the zinc alloy powder preferably contains from 0.005% to 0.012%, both inclusive, by weight, of bismuth.

Then, corrosion resistance of the zinc alloy powder can be effectively increased.

In the alkaline battery, the zinc alloy powder preferably contains 30% to 45%, both inclusive, by weight of particles with particle sizes of 75 µm or less.

Then, high-power pulse discharge performance can be effectively enhanced.

In the alkaline battery, the zinc alloy powder preferably contains from 0.0001% to 0.01%, both inclusive, by weight, of aluminium, and/or from 0.0001% to 0.02%, both inclusive, by weight, of indium.

Then, corrosion resistance of the zinc alloy powder can be further increased, thereby further reducing corrosive gas.

In the alkaline battery, one of the negative electrode and the alkaline electrolyte preferably includes, with respect to the zinc alloy powder, from 0.003% to 0.3%, both inclusive, by weight, of at least one material selected from the group consisting of: anionic surfactants whose general formulas are respectively expressed as R-O-PO₃X₂, R-O-SO₃X, and R-SO₃X (in each of which R is an alkyl group whose general formula is expressed as CₘH₂ₘ₊₁ (4 ≤ m ≤ 18), and X is one of H, Na, and K); and anionic surfactants whose general formulas are respectively expressed as R-O-(CH₂CH₂O)ₙ-PO₃X₂ and R-O-(CH₂CH₂O)ₙ-SO₃X (in each of which 1 ≤ n ≤ 3, R is an alkyl group whose general formula is expressed as CₘH₂ₘ₊₁ (4 ≤ m ≤ 18), and X is one of H, Na, and K).

Then, an anti-corrosion effect with an anionic surfactant can be obtained, thereby further reducing corrosive gas.

An AA alkaline-manganese battery according to the present invention includes: a positive electrode including a positive electrode active material; a negative electrode including a negative electrode active material; a separator; and an alkaline electrolyte, wherein the positive electrode active material includes electrolytic manganese dioxide, the negative electrode active material includes zinc alloy powder containing calcium and bismuth, the zinc alloy powder contains from 10% to 60%, both inclusive, by weight, of calcium with respect to bismuth, and from 0.004% to 0.02%, both inclusive, by weight, of bismuth, and when at a discharge ambient temperature of 21°C, a discharge process including sequential steps of 1500-mW pulse discharge performed for two seconds and 650-mW discharge performed for 28 seconds is successively repeated 10 times, then the discharge process is suspended for 55 minutes, and the discharge process repeated 10 times and the suspension for 55 minutes are alternately performed, a total number of pulses measured after a start of the discharge process until a lowest voltage in the 1500-mW pulse discharge reaches 1.05 V is larger than 110.

An AA nickel-containing alkaline battery according to the present invention includes: a positive electrode including a positive electrode active material; a negative electrode including a negative electrode active material; a separator; and an alkaline electrolyte, wherein the positive electrode active material includes nickel oxyhydroxide, the negative electrode active material includes zinc alloy powder containing calcium and bismuth, the zinc alloy powder contains from 10% to 60%, both inclusive, by weight, of calcium with respect to bismuth, and from 0.004% to 0.02%, both inclusive, by weight, of bismuth, and when at a discharge ambient temperature of 21°C, a discharge process including sequential steps of 1500-mW pulse discharge performed for two seconds and 650-mW discharge performed for 28 seconds is successively repeated 10 times, then the discharge process is suspended for 55 minutes, and the discharge process repeated 10 times and the suspension for 55 minutes are alternately performed, a total number of pulses measured after a start of the discharge process until a lowest voltage in the 1500-mW pulse discharge reaches 1.05 V is larger than 220.

### ADVANTAGES OF THE INVENTION

According to the present invention, an alkaline battery exhibiting excellent high-power pulse discharge characteristics and high reliability can be provided at low cost.

### BRIEF DESCRIPTION OF THE DRAWINGS

[FIG. 1] FIG. 1 is a cross-sectional view illustrating a configuration of an alkaline battery according to an embodiment of the present invention.
[FIG. 2] FIG. 2 is a graph showing a discharge curve of a AA alkaline-manganese battery in a digital still camera discharge test conforming to an ANSI standard.
[FIG. 3] FIG. 3 is a graph showing a discharge curve of an AA nickel-containing alkaline battery in a digital still camera discharge test conforming to an ANSI standard.

### DESCRIPTION OF REFERENCE CHARACTERS

- 1: positive electrode case
- 2: graphite coating
- 3: positive electrode material mixture pellet
- 4: separator
- 5: insulating cap (bottom insulator)
- 6: gelled negative electrode
- 7: resin sealing plate
- 8: bottom plate
- 9: insulating washer
- 10: negative electrode current collector
- 11: external label

### DESCRIPTION OF EMBODIMENTS

An embodiment of the present invention will be described hereinafter with reference to the drawings.

An alkaline battery according to an embodiment of the present invention includes, as main components, a positive electrode containing a positive electrode active material, a negative electrode containing a negative electrode active material, a separator, and an alkaline electrolyte. The positive electrode active material is made of one of electrolytic manganese dioxide, a combination of electrolytic manganese dioxide and nickel oxyhydroxide, and nickel oxyhydroxide. The negative electrode active material is made of zinc alloy powder containing at least calcium and bismuth.

Some of main features of this embodiment reside in zinc alloy powder which will be specifically described as follows:
(1) The zinc alloy powder contains from 10% to 60%, both inclusive, by weight, of calcium with respect to bismuth. In other words, the Ca/Bi ratio of the calcium weight with respect to the bismuth weight in the zinc alloy powder is in the range from 0.1 to 0.6, both inclusive.
(2) The zinc alloy powder contains from 0.004% to 0.02%, both inclusive, by weight, of bismuth.
(3) The zinc alloy powder contains at least 11%, by weight, of particles with particle sizes of 75 µm or less.

The foregoing features (1)-(3) will be specifically described.

If the Ca/Bi ratio of the calcium weight with respect to the bismuth weight in the zinc alloy powder is less than 0.1, the internal resistance of a battery cannot be sufficiently reduced, and thus advantages of enhancement of high-power pulse discharge performance and reduction of a rapid temperature rise occurring in a short circuit cannot be sufficiently achieved. On the other hand, if the Ca/Bi ratio exceeds 0.6, calcium added to bismuth reaches its saturation amount, and thus calcium is also precipitated in a portion containing no bismuth, thereby causing degradation of high-power pulse discharge performance. In view of these results, to add calcium to bismuth so as to reduce the internal resistance of a battery, the Ca/Bi ratio is preferably in the range from 0.1 to 0.6, both inclusive. Further, to effectively add calcium to bismuth, the Ca/Bi ratio is in the range from 0.2 to 0.4, both inclusive. In other words, the zinc alloy powder preferably contains from 20% to 40%, both inclusive, by weight, of calcium with respect to bismuth.

If the amount of bismuth contained in the zinc alloy powder is less than 0.004%, by weight, corrosive gas cannot be sufficiently reduced. If the amount of bismuth contained in the zinc alloy powder exceeds 0.02%, by weight, corrosive gas can be reduced, but the internal resistance of the battery might increase to cause an increase in polarization of a negative electrode in high-power pulse discharge and also cause a rapid temperature rise in the case of a short circuit. In this regard, to sufficiently reduce corrosive gas without an increase in the internal resistance of the battery, the amount of bismuth in zinc alloy powder is preferably in the range from 0.004% to 0.02%, both inclusive, by weight. Further, to effectively reduce corrosive gas, the amount of bismuth is preferably in the range from 0.005% to 0.012%, both inclusive, by weight.

To obtain satisfactory performance during high-power pulse discharge for application to digital still cameras, the Ca/Bi ratio is preferably in the range from 0.1 to 0.6, both inclusive, as shown in feature (1), and in addition, the zinc alloy powder preferably contains at least 11%, by weight, of particles with particle sizes of 75 µm or less as shown in feature (3).

In this manner, the reaction area of zinc can be increased to further enhance high-power pulse discharge performance. In addition to the above condition that the Ca/Bi ratio is in the range from 0.1 to 0.6, both inclusive, the fine-powder percentage of fine powder (particles) with particle sizes of 75 µm or less in the zinc alloy powder is preferably at least 11%, by weight. In this case, satisfactory performance can also be achieved during high-power pulse discharge for application to digital still cameras.

If the fine-powder percentage of particles with particle sizes of 75 µm or less exceeds 45%, by weight, the amount of generated corrosive gas might increase to cause leakage. In view of this problem, to further effectively enhance high-power pulse discharge performance, the zinc alloy powder preferably contains 45% or less, by weight, of particles with particle sizes of 75 µm or less. Further, the fine-powder percentage with which the most desirable characteristics are likely to be obtained is in the range from 30% to 45%, both inclusive, by weight.

In addition to features (1)-(3), this embodiment has the following features:
4) The zinc alloy powder contains from 0.0001% to 0.01%, both inclusive, by weight, of aluminium and/or from 0.0001% to 0.02%, both inclusive, by weight, of indium, in addition to calcium and bismuth.
5) The negative electrode or the alkaline electrolyte contains, with respect to the zinc alloy powder, from 0.003% to 0.3%, both inclusive, by weight, of at least one of anionic surfactants whose general formulas are respectively expressed as R-O-PO₃X₂, R-O-SO₃X, and R-SO₃X (in each of which R is an alkyl group whose general formula is expressed as CₘH₂ₘ₊₁ (where 4 ≤ m ≤ 18), and X is one of H, Na, and K), and anionic surfactants whose general formulas are respectively expressed as R-O-(CH₂CH₂O)ₙ-PO₃X₂ and R-O-(CH₂CH₂O)ₙ-SO₃X (in each of which 1 ≤n ≤3, and R is an alkyl group whose general formula is expressed as CₘH₂ₘ₊₁ (where 4 ≤ m ≤ 18), and X is one of H, Na, and K).

Features (4) and (5) described above will now be specifically described.

If the amount of aluminium contained in the zinc alloy powder exceeds 0.01% by weight, polarization of the negative electrode markedly increases during high-power pulse discharge. On the other hand, if the amount of aluminium is equal to or less than 0.01 % by weight, the amount of increase in polarization can be relatively reduced, thereby further reducing corrosive gas. Accordingly, the above features are effective in sufficiently reducing corrosive gas in battery design.

Indium contained in the zinc alloy powder can further reduce corrosive gas without degradation of high-power discharge performance and a rapid temperature rise in a short circuit. Accordingly, the upper limit of the indium amount is preferably reduced as much as possible, and is at most 0.02%, by weight, in terms of cost reduction, although this amount is not greatly restricted in its performance.

In many cases of electrolytic refining processes for base metal zinc, aluminium is used as an electrode (i.e., a cathode) and indium is contained in base metal zinc. Therefore, approximately 0.0001%, by weight, of these two metal elements are generally contained in the zinc alloy powder even when these metal elements are intentionally added in forming the zinc alloy powder.

As described above, to further reduce corrosive gas, in addition to the condition that the zinc alloy powder contains bismuth in an appropriate range of amount as shown in feature (2), the zinc alloy powder preferably contains aluminium in an appropriate range of amount, and/or indium in an appropriate range of amount, as described in feature (4).

In the case of employing feature (5) in addition to feature (2), corrosive gas can be further reduced. Specifically, from 0.003% to 0.3%, both inclusive, by weight, of at least one of the anionic surfactants listed in feature (5) with respect to the zinc alloy powder is preferably added to the negative electrode or the alkaline electrolyte. These anionic surfactants are adhered to the surface of the zinc powder to form an adsorption layer on this surface, and thereby, function as anti-corrosives.

When the amount of an anionic surfactant added to the negative electrode or the alkaline electrolyte is 0.003% or more, by weight, with respect to the zinc alloy powder, a sufficient anti-corrosion effect with an anionic surfactant can be obtained. In this case, corrosive gas can be further reduced. When the amount of the anionic surfactant is less than or equal to 0.3% by weight, it is possible to obtain an anti-corrosion effect with the anionic surfactant without degradation of high-power pulse discharge performance.

In addition, regarding R constituting the general formula of an anionic surfactant, the repellency of the adsorption layer formed of the anionic surfactant on the surface of the zinc powder is enhanced as the number m of carbons in a hydrophobic group R increases. Accordingly, when the number m of carbons in R is four or more, the repellency of the adsorption layer can be sufficiently enhanced. On the other hand, when the number m of carbons in R is 18 or less, the difficulty for the anionic surfactant to move in an alkaline electrolyte can be reduced. Consequently, anionic surfactant molecules are readily removed from the zinc powder surface, and thus do not inhibit discharge reaction.

The anionic hydrophilic group is preferably one of alkyl phosphate (R-O-PO₃²⁻), alkyl sulfate (R-O-SO₃⁻), and alkyl sulfonate (R-SO₃⁻), which are stable in an alkaline electrolyte and are not likely to form insoluble salts, for example, with impurity ions in the alkaline electrolyte. As counterions X, elements H, Na, and K are industrially produced in general, and are readily available and easily utilized.

In a case where the anionic surfactant includes an ethylene oxide chain O-(CH₂CH₂O)ₙ, i.e., a nonionic hydrophilic group, and also includes, at its end, phosphate (-PO₃X₂) or sulfate (-SO₃X), the degree of adsorption of the anionic surfactant on the zinc powder surface increases as the number n increases. Accordingly, the number n is preferably in the range from 1 to 3, both inclusive. In this case, an appropriate degree of adsorption can be obtained and, as a result, anionic surfactant molecules can be easily removed from the zinc powder surface during discharge and do not inhibit discharge reaction.

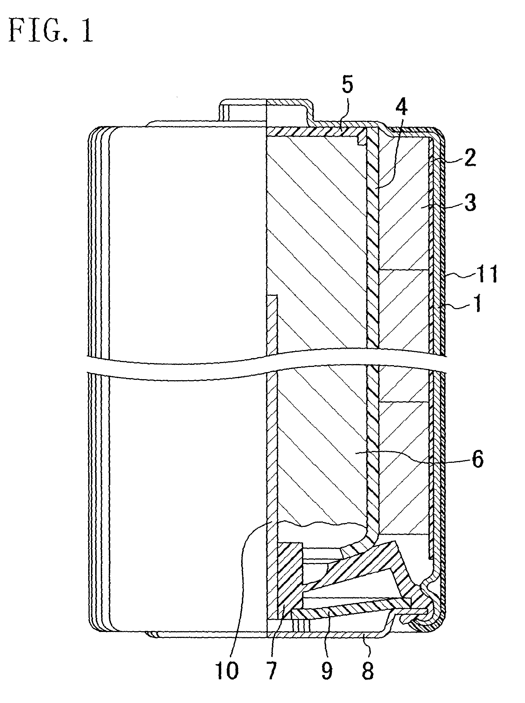

A structure of an alkaline battery according to an embodiment of the present invention will be described hereinafter with reference to FIG. 1. FIG. 1 is a cross-sectional view illustrating a structure of the alkaline battery of this embodiment.

As illustrated in FIG. 1, the alkaline battery of this embodiment includes, as main components, positive electrode material mixture pellets 3 each containing a positive electrode active material, a gelled negative electrode 6 containing a negative electrode active material, and a separator 4 interposed between the positive electrode material mixture pellets 3 and the gelled negative electrode 6.

The alkaline battery illustrated in FIG. 1 can be fabricated in the following manner.

First, a plurality of hollow cylindrical positive electrode material mixture pellets 3 each containing a positive electrode active material are inserted in a positive electrode case 1 provided with graphite coating 2 on the inner surface thereof and made of a nickel-coated steel plate, and are brought into close contact with the inner surface of the positive electrode case 1 with application of pressure. Next, the cylindrically wound separator 4 and an insulating cap 5 are inserted into the positive electrode material mixture pellets 3, and then an electrolyte is poured in the separator 4 in order to moisten the separator 4 and the positive electrode material mixture pellets 3. After the pouring, the inside of the separator 4 is filled with the gelled negative electrode 6. This gelled negative electrode 6 is formed beforehand by mixing and dispersing a negative electrode active material containing zinc alloy powder having features (1)-(3), and more preferably feature (4), described above, in a gelled alkaline electrolyte (i.e., a dispersion medium). Then, a negative electrode current collector 10 formed by integrating a resin sealing plate 7, a bottom plate 8 also serving as a negative electrode terminal, and an insulating washer 9 is inserted in the gelled negative electrode 6. Thereafter, the edge of an opening of the positive electrode case 1 is crimped to the periphery of the bottom plate 8 with an end of the sealing plate 7 interposed therebetween, thereby bringing the opening edge of the positive electrode case 1 into close contact with the periphery of the bottom plate 8. Lastly, the outer surface of the positive electrode case 1 is coated with an external label 11.

In this manner, the alkaline battery of this embodiment can be obtained.

In fabrication of the alkaline battery of this embodiment, the gelled negative electrode 6 or the alkaline electrolyte preferably contains the anionic surfactants listed in feature (5).

Here, a discharge test intended for application of AA alkaline batteries to digital still cameras and conforming to the ANSI standard was conducted on the alkaline battery of this embodiment to know the following characteristics of the battery.

The term "ANSI" is an abbreviation for American National Standards Institute. In this standard, conditions defined for discharge tests for application of AA alkaline batteries to digital still cameras will be described hereinafter.

### -Test Conditions-

· Discharge ambient temperature: 21°C
· Discharge Process: sequential steps of 1500-mW pulse discharge performed for two seconds and 650-mW discharge performed for 28 seconds are performed, as a discharge process, on one battery cell. This discharge process is successively repeated 10 times.
· The above discharge process (which takes five minutes in total) and a 55-minute pause are alternately performed to measure the total number of pulses after the start of the discharge process until the lowest voltage in the 1500-mW pulse discharge reaches 1.05 V.

In a case where the alkaline battery of this embodiment is a AA alkaline-manganese battery using only electrolytic manganese dioxide as a positive electrode active material, the number of discharge pulses obtained in the digital still camera discharge test conforming to the ANSI standard is larger than 110, and high-power pulse discharge characteristics are obtained (see, for example, Tables 1-4, which will be described later).

In a case where the alkaline battery of this embodiment is a AA nickel-containing alkaline battery using only nickel oxyhydroxide or a combination of nickel oxyhydroxide and electrolytic manganese dioxide as a positive electrode active material, the number of discharge pulses in the digital still camera discharge test conforming to the ANSI standard is larger than 220, and high-power pulse discharge characteristics are obtained (see, for example, Table 5, which will be described later).

In this manner, since the alkaline battery of this embodiment has features (1), (2), and (3), and more preferably features (4) and (5), in a digital still camera discharge test conforming to the ANSI standard, the number of discharge pulses is larger than 110 in the case of a AA alkaline-manganese battery, and is larger than 220 in the case of a AA nickel-containing alkaline battery. In either case, the alkaline battery exhibits high-power pulse discharge characteristics.

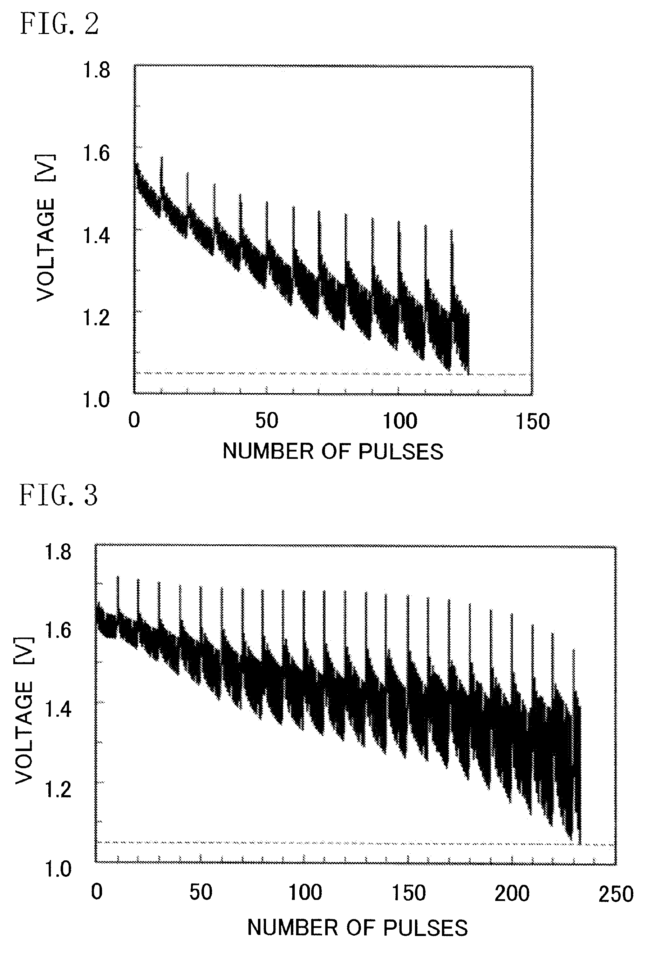

FIG. 2 shows a discharge curve of a AA alkaline-manganese battery in a digital still camera discharge test conforming to the ANSI standard. FIG. 3 shows a discharge curve of a AA nickel-containing alkaline battery in a digital still camera discharge test conforming to the ANSI standard. The AA alkaline-manganese battery used for the discharge test shown in FIG. 2 is a dry battery in which: (1) the Ca/Bi ratio of the calcium weight with respect to the bismuth weight in zinc alloy powder is 0.3; (2) the zinc alloy powder contains 0.01%, by weight, of bismuth; (3) the zinc alloy powder contains 35%, by weight, of particles with particle sizes of 75 µm or less; (4) the zinc alloy powder contains 0.001%, by weight, of aluminium and 0.01%, by weight, of indium; and (5) the negative electrode contains 0.1%, by weight, of an anionic surfactant with respect to the zinc alloy powder. The AA nickel-containing alkaline battery used for the discharge test shown in FIG. 3 is a dry battery in which: (1) the Ca/Bi ratio is 0.3; (2) zinc alloy powder contains 0.01%, by weight, of bismuth; (3) the zinc alloy powder contains 35%, by weight, of particles with particle sizes of 75 µm or less; (4) the zinc alloy powder contains 0.001%, by weight, of aluminium and 0.01%, by weight, of indium; and (5) the negative electrode contains 0.1%, by weight, of an anionic surfactant with respect to the zinc alloy powder.

Examples of the present invention will be specifically described hereinafter. It should be noted that the present invention is not limited to the following examples.

### <Example 1>

Zinc alloy powder was formed in the following manner. Base metal zinc having a purity of 99.99% or more was melted at a temperature higher than 500°C, and then an additional element was added to this base metal zinc and was uniformly dissolved therein, thereby preparing a zinc alloy molten metal. The zinc alloy molten metal was prepared such that the contents of Ca, Bi, In, and Al in the entire zinc alloy have values shown in Table 1. Thereafter, this zinc alloy molten metal was sprayed (atomized) with high-pressure gas to be changed into powder, and was classified with a screen, thereby obtaining zinc alloy powder. The classification was adjusted such that the fine-powder percentage of particles with particle sizes of 75 µm or less (i.e., particles of -200 mesh size) has a value shown in Table 1. In this manner, zinc alloy powders (1)-(26) shown in Table 1 were formed. The "content in zinc alloy powder" in Table 1 means (the weight of an additional element / the weight of zinc alloy powder) × 100 [% by weight]. The "fine-powder percentage" means (the weight of particles with particle sizes of 75 µm or less / the weight of zinc alloy powder) × 100 [% by weight].

In Table 1, zinc alloy powders (1)-(13) were formed mainly for the purpose of knowing an optimum composition of zinc alloy powder, and zinc alloy powders (14)-(20) were formed mainly for the purpose of knowing an optimum fine-powder percentage of particles with particle sizes of 75 µm or less. Zinc alloy powders (21)-(26) were formed for comparison, and zinc alloy powders (21)-(26) respectively correspond to zinc alloy powders shown in PATENT DOCUMENTS 1-6.

**[Table 1]**

| Type of zinc alloy powder | Content in zinc alloy powder [wt.%] | | | | Fine-powder percentage [wt%] | Ca/Bi | 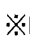 Note |
|---|---|---|---|---|---|---|---|
| | Ca | Bi | In | Al | | | |
| (1) | 0 | 0.004 | 0 | 0 | 35 | | For study of composition |
| (2) | 0.0004 | 0.002 | 0 | 0 | 35 | 0.2 | |
| (3) | 0.0004 | 0.004 | 0 | 0 | 35 | 0.1 | |
| (4) | 0.0005 | 0.005 | 0 | 0 | 35 | 0.1 | |
| (5) | 0.001 | 0.005 | 0 | 0 | 35 | 0.2 | |
| (6) | 0.003 | 0.01 | 0 | 0 | 35 | 0.3 | |
| (7) | 0.0035 | 0.012 | 0 | 0 | 35 | 0.29 | |
| (8) | 0.0048 | 0.012 | 0 | 0 | 35 | 0.4 | |
| (9) | 0.006 | 0.012 | 0 | 0 | 35 | 0.5 | |
| (10) | 0.006 | 0.02 | 0 | 0 | 35 | 0.3 | |
| (11) | 0.012 | 0.02 | 0 | 0 | 35 | 0.6 | |
| (12) | 0.014 | 0.02 | 0 | 0 | 35 | 0.7 | |
| (13) | 0.012 | 0.025 | 0 | 0 | 35 | 0.48 | |
| (14) | 0.003 | 0.01 | 0 | 0 | 1 | | For study of fine-powder percentage |
| (15) | 0.003 | 0.01 | 0 | 0 | 6 | | |
| (16) | 0.003 | 0.01 | 0 | 0 | 11 | | |
| (17) | 0.003 | 0.01 | 0 | 0 | 30 | | |
| (18) | 0.003 | 0.01 | 0 | 0 | 40 | | |
| (19) | 0.003 | 0.01 | 0 | 0 | 45 | | |
| (20) | 0.003 | 0.01 | 0 | 0 | 50 | | |
| (21) | 0 | 0.01 | 0.01 | 0.01 | 1 | | For comparison |
| (22) | 0.005 | 0.01 | 0.01 | 0 | 1 | | |
| (23) | 0.0045 | 0.025 | 0 | 0.003 | 1 | | |
| (24) | 0.004 | 0.05 | 0.05 | 0.025 | 1 | | |
| (25) | 0 | 0.015 | 0.02 | 0 | 75 | | |
| (26) | 0 | 0.01 | 0.03 | 0.005 | 40 | | |

The negative electrode was formed in the following manner. Two parts by weight of polyacrylic acid and sodium polyacrylate were added to, and mixed with, 100 parts by weight of 36%, by weight, of a potassium hydroxide aqueous solution containing 2%, by weight, of ZnO, and the resultant mixture was gelled, thereby obtaining a gelled electrolyte. The obtained gelled electrolyte was allowed to stand for 24 hours to be sufficiently aged. Zinc alloy powder having a weight ratio of 1.8 and an anionic surfactant (C₈H₁₇-O-PO₃K₂), as an anti-corrosive, were added to, and sufficiently mixed with, a given amount of the gelled electrolyte, thereby forming a gelled negative electrode. The anionic surfactant was added to the gelled electrolyte such that 0.05%, by weight, of the anionic surfactant with respect to the zinc alloy powder was contained in the zinc alloy powder. In this manner, gelled negative electrodes respectively associated with zinc alloy powders (1)-(26) shown in Table 1 were formed.

The positive electrode was formed in the following manner. Electrolytic manganese dioxide and graphite were mixed at a weight ratio of 94 : 6, and one part by weight of an electrolyte (i.e., 36%, by weight, of a potassium hydroxide aqueous solution containing 2%, by weight, of ZnO) was mixed with 100 parts by weight of mixture powder. The resultant mixture was uniformly stirred and mixed with a mixer, and was sized to have a uniform grain size. The obtained grain substance was press-formed into a hollow cylindrical shape, thereby forming a positive electrode material mixture pellet. In the foregoing process, HH-TF produced by TOSOH CORPORATION was used as electrolytic manganese dioxide, and SP-20 produced by Nippon Graphite Industries, ltd. was used as graphite.

In Example 1, a AA alkaline-manganese battery having a structure illustrated in FIG. 1 was fabricated. Specifically, a plurality of hollow cylindrical positive electrode material mixture pellets 3 having a total weight of 10.3 g were inserted in a positive electrode case 1, and were brought into close contact with the inner surface of the positive electrode case 1 with repressurization. Thereafter, a separator 4 which is a composite nonwoven fabric made of vinylon and lyocell produced by KURARAY CO., LTD., and an insulating cap (i.e., a bottom insulator) 5 were also inserted in the positive electrode material mixture pellets 3. Then, 1.5 g of an electrolyte (i.e., 36%, by weight, of a potassium hydroxide aqueous solution containing 2%, by weight, of ZnO) was poured in the separator 4. After the pouring, the inside of the separator 4 was filled with 6.0 g of a gelled negative electrode 6. Thereafter, a negative electrode current collector 10 formed by integrating a resin sealing plate 7, a bottom plate 8 also serving as a negative electrode terminal, and an insulating washer 9 was inserted in the gelled negative electrode 6. Thereafter, the edge of an opening of the positive electrode case 1 was crimped to the periphery of the bottom plate 8 with an end of the sealing plate 7 interposed therebetween, thereby bringing the opening edge of the positive electrode case 1 into close contact with the periphery of the bottom plate 8. Lastly, the outer surface of the positive electrode case 1 was coated with an external label 11, thereby forming an alkaline-manganese battery.

In the foregoing manner, AA alkaline-manganese batteries (1)-(26) respectively associated with zinc alloy powders (1)-(26) shown in Table 1 were formed.

### [Evaluation Test]

Evaluation tests (I)-(III) were conducted on the alkaline-manganese batteries (1)-(26) as follows:

### (I) Pulse Discharge Test (DSC Pulse Discharge Test) for Digital Still Cameras

Five cells of each of batteries (1)-(26) were prepared, and a digital still camera discharge test conforming to the ANSI standard requiring the above-mentioned conditions were conducted on each of the five cells of batteries, in order to measure the number of discharge pulses to the time at which the lowest voltage in 1500-mW pulse discharge reaches 1.05 V. The numbers of discharge pulses measured for the five cells were averaged, thereby obtaining the number of discharge pulses.

### (II) Measurement of Short-circuit Temperature

Five cells of each of batteries (1)-(26) were prepared, and a thermocouple is attached to each of the five cells at a given position (specifically, at a position about 1 cm away from the positive electrode terminal) on the external label in a temperature-controlled room at 20°C. Then, the maximum end-point temperature of each battery when the battery was brought into contact with nickel leads attached to the positive and negative electrode terminals to be externally short-circuited, was measured. The maximum end-point temperatures for five cells were averaged, thereby obtaining a short-circuit temperature.

### (III) Leakage Resistance Test

Twenty cells of each of undischarged batteries (1)-(26) were prepared, and then were stored for one month at a temperature of 60°C and a relative humidity of 90%. Thereafter, the number of batteries showing leakage out of the 20 cells was counted, thereby obtaining an occurrence index [%] of leakage.

Table 2 shows results of evaluation tests (I)-(III). In Table 2, the short-circuit temperatures are standardized by defining the maximum end-point temperature [°C] of battery (2 1) as 100.

**[Table 2]**

| Battery type | (I) DSC pulse discharge performance [Number of pulses] | (II) Short-circuit temperature [Index] | (III) Leakage occurrence index [%] |
|---|---|---|---|
| (1) | 102 | 104 | 0 |
| (2) | 109 | 101 | 20 |
| (3) | 110 | 99 | 0 |
| (4) | 113 | 98 | 0 |
| (5) | 121 | 92 | 0 |
| (6) | 125 | 93 | 0 |
| (7) | 126 | 91 | 0 |
| (8) | 123 | 92 | 0 |
| (9) | 117 | 95 | 0 |
| (10) | 114 | 96 | 0 |
| (11) | 113 | 95 | 0 |
| (12) | 93 | 96 | 0 |
| (13) | 96 | 111 | 0 |
| (14) | 82 | 101 | 0 |
| (15) | 98 | 99 | 0 |
| (16) | 113 | 95 | 0 |
| (17) | 124 | 89 | 0 |
| (18) | 126 | 90 | 0 |
| (19) | 127 | 92 | 0 |
| (20) | 122 | 94 | 5 |
| (21) | 80 | 100(Standard) | 0 |
| (22) | 74 | 99 | 0 |
| (23) | 72 | 108 | 0 |
| (24) | 69 | 113 | 0 |
| (25) | 102 | 123 | 40 |
| (26) | 103 | 114 | 10 |

Among batteries (1)-(13), batteries (3)-(11) in which the ratio of the calcium weight with respect to the bismuth weight in the zinc alloy powder, i.e., Ca/Bi, is in the range from 0.1 to 0.6, both inclusive, and the bismuth content in the zinc alloy powder is in the range from 0.004% to 0.02%, both inclusive, by weight, exhibit high performance in evaluation test (I) and high reliability in evaluation tests (II) and (III). In particular, batteries (5)-(8) show high DSC pulse discharge performances and low short-circuit temperatures.

In battery (1) in which zinc alloy powder does not contain calcium, although the leakage occurrence index is 0%, the DSC pulse discharge performance is low, and the short-circuit temperature is high.

In battery (2) having a relatively low bismuth content of 0.002%, by weight (i.e., less than 0.004%, by weight) in zinc alloy powder, leakage occurs. In contrast, in battery (13) having a relatively high bismuth content of 0.025%, by weight (i.e., higher than 0.02%, by weight), the DSC pulse discharge performance is low, and the short-circuit temperature is high.

In battery (12) in which Ca/Bi exceeds the range from 0.1 to 0.6 and is 0.7, although the short-circuit temperature is low, the DSC pulse discharge performance is low. This result is considered to be because the Ca/Bi ratios exceeding 0.6 saturate the amount of calcium added to bismuth and, consequently, calcium is also precipitated in a portion containing no bismuth, leading to degradation of the DSC pulse discharge performance.

Here, high DSC pulse discharge performance and low short-circuit temperature in batteries (5)-(8) among batteries (3)-(11), are considered to be obtained by a synergism of a condition in which the zinc alloy powder contains 20% to 40%, both inclusive, by weight, of calcium with respect to bismuth (i.e., Ca/Bi is in the range from 0.2 to 0.4, both inclusive) and a condition in which the zinc alloy powder contains 0.005% to 0.012%, both inclusive, by weight, of bismuth.

Specifically, setting the Ca/Bi ratio within the range from 0.2 to 0.4 is considered to enable effective addition of calcium to bismuth without precipitation of calcium in a portion containing no bismuth, and thereby, effectively reduce the internal resistance of a battery. Further, setting the content of bismuth in the zinc alloy powder within the range from 0.005% to 0.012%, by weight, is considered to effectively reduce corrosive gas without degradation of high-power pulse discharge performance and without an increase in short-circuit temperature.

Among batteries (14)-(20), batteries (16)-(20) in which the fine-powder percentage of fine powder (particles) with particle sizes of 75 µm or less in zinc alloy powder is at least 11%, by weight, exhibit high performance in evaluation test (I) and high reliability in evaluation tests (II) and (III). In particular, batteries (17)-(19) in which the fine-powder percentage of particles with particle sizes of 75 µm or less is in the range from 30% to 45%, both inclusive, by weight, exhibit high DSC pulse discharge performance and low short-circuit temperature. Battery (20) in which the fine-powder percentage of particles with particle sizes of 75 µm or less is 50%, by weight, shows slight leakage, but exhibits high DSC pulse discharge performance and low short-circuit temperature.

Batteries (14) and (15) in which the fine-powder percentage of particles with particle sizes of 75 µm or less is less than 11%, by weight, fail to show sufficient DSC pulse discharge performance (i.e., the number of pulses < 110). Battery (20) in which the fine-powder percentage of particles with particle sizes of 75 µm or less is 50%, by weight, shows slight leakage. Such tendencies in DSC pulse discharge performance and leakage occurrence index are considered to basically reflect a phenomenon in which a change in fine-powder percentage changes the surface area (i.e., the reaction area) of a portion of zinc powder in contact with an electrolyte. It should be noted that the short-circuit temperature generally increases as the fine-powder percentage increases, but is substantially at the minimum in batteries (17) and (18) among batteries (14)-(20). The reasons for this phenomenon is not yet clear, but might be some interaction between optimization of the composition of zinc alloy powder (i.e., addition of optimum amounts of calcium and bismuth) and optimization of the fine-powder percentage, where these optimizations are performed at the same time.

Among batteries (21)-(26), batteries (21)-(24) in which the fine-powder percentage of particles with particle sizes of 75 µm or less is 1%, by weight, and zinc alloy powder hardly contains fine powder, have very small discharge pulse numbers of about 70 to about 80 in the DSC pulse discharge test. On the other hand, batteries (25) and (26), although the fine-powder percentage of particles with particle sizes of 75 µm or less is high, the number of discharge pulses in the DSC pulse discharge test is less than 110. In addition, batteries (25) and (26) show problems of high short-circuit temperatures and leakage. These results confirm that batteries (3)-(11) and (16)-(20) of examples of the present invention exhibit excellent high-power pulse discharge characteristics, and reduce a rapid temperature rise occurring in a short circuit and leakage, as compared to conventional batteries.

### <Example 2>

In Example 2, optimum contents of aluminium and indium (i.e., an anti-corrosive element) in zinc alloy powder were studied.

AA alkaline-manganese batteries (27)-(35) were fabricated in the same manner as in Example 1 except that zinc alloy powder contains aluminium and/or indium. The left part of Table 3 shows the contents of Ca, Bi, In, Al in zinc alloy powder and the fine-powder percentages of particles with particle sizes of 75 µm or less in zinc alloy powders (27)-(35). Evaluation tests (I)-(III) were conducted on batteries (27)-(35) in the same manner as in Example 1. The obtained results are shown in the right part of Table 3. In Table 3, the short-circuit temperature in the evaluation test (II) are standardized by defining the maximum end-point temperature [°C] of battery (21) in Example 1 as 100.

**[[Table 3]**

| Type | Content in zinc alloy powder [wt.%] | | | | Fine-powder percentage [wt.%] | (I) DSC pulse discharge performance [Number of pulses] | (II) Short-circuit temperature [Index] | (III) Leakage occurrence index [%] | 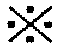 Note |
|---|---|---|---|---|---|---|---|---|---|
| | Ca | Bi | In | Al | | | | | |
| (27) | 0.0035 | 0.012 | 0 | 0.001 | 35 | 124 | 92 | 0 | |
| (28) | 0.0035 | 0.012 | 0 | 0.01 | 35 | 119 | 94 | 0 | |
| (29) | 0.0035 | 0.012 | 0 | 0.015 | 35 | 101 | 96 | 0 | |
| (30) | 0.0035 | 0.012 | 0.001 | 0 | 35 | 125 | 91 | 0 | |
| (31) | 0.0035 | 0.012 | 0.01 | 0 | 35 | 122 | 92 | 0 | |
| (32) | 0.0035 | 0.012 | 0.02 | 0 | 35 | 123 | 92 | 0 | |
| (33) | 0.0035 | 0.012 | 0.015 | 0.005 | 35 | 120 | 94 | 0 | |
| (34) | 0.003 | 0.01 | 0 | 0.005 | 50 | 118 | 93 | 0 | |
| (35) | 0.003 | 0.01 | 0.01 | 0 | 50 | 122 | 94 | 0 | |
| (7) | 0.0035 | 0.012 | 0 | 0 | 35 | 126 | 91 | 0 | |
| (20) | 0.003 | 0.01 | 0 | 0 | 50 | 122 | 94 | 5 | For comparison |
| (21) | 0 | 0.01 | 0.01 | 0.01 | 1 | 80 | 100(Standard) | 0 | |

Batteries (27)-(29) show the same results as those of battery (7) in Example 1 except that zinc alloy powder further contains aluminium. Batteries (27)-(29) have different aluminium contents in the zinc alloy powder. Among batteries (27)-(29), batteries (27) and (28) in which the content of aluminium is less than or equal to 0.01%, by weight, exhibit high performance in evaluation test (I) and high reliability in evaluation tests (II) and (III). On the other hand, battery (29) in which the content of aluminium is 0.015%, by weight, (i.e., higher than 0.01% by weight) exhibits a significant increase in polarization of a negative electrode occurring in DSC pulse discharge and low DSC pulse discharge performance. These results suggest that aluminium contents of 0.01% or less, by weight, achieve relatively small degree of a polarization increase in the negative electrode in DSC pulse discharge to further reduce leakage.

Batteries (30)-(32) show the same results as those of battery (7) in Example 1 except that zinc alloy powder further contains indium. Batteries (30)-(32) have different indium contents in zinc alloy powder. All batteries (30)-(32) exhibit high performance in evaluation test (I) and high reliability in evaluation tests (II) and (III). These results suggest that indium in zinc alloy powder further reduces leakage without degradation of DSC pulse discharge performance and without a rapid temperature rise in a short circuit. To reduce cost, the indium content in zinc alloy powder is preferably about 0.02%, by weight (i.e., in battery (32)) at the maximum, and is preferably reduced as much as possible.

Battery (33) shows the same results as those of battery (7) in Example 1 except that zinc alloy powder further contains aluminium and indium. Battery (33) exhibits high DSC pulse discharge performance, low short-circuit temperature, and low leakage occurrence index. Accordingly, in further consideration of the results of batteries (27)-(29) in which zinc alloy powder further contains only Al and batteries (30)-(32) in which zinc alloy powder further contains only In, as long as the aluminium content in the zinc alloy powder is 0.01 % or less, by weight, and the indium content is 0.02% or less, by weight, substantially the same evaluation results are considered to be obtainable with any combination of the aluminum and indium contents.

An advantage obtained by adding aluminium and/or indium to zinc alloy powder is to complement corrosion resistance of the zinc alloy powder, as proved by the fact that batteries (34) and (35) prevent leakage, whereas battery (20) in Example 1 shows slight leakage (where leakage occurrence index is 5%). As shown by a comparison between battery (20) and battery (34), addition of aluminium, as a complementary element, to zinc alloy powder somewhat sacrifices DSC pulse discharge performance. In addition, producing zinc alloy powder for battery (35) involves a slight increase in cost. However, in a case where a battery needs to be designed to considerably reduce corrosive gas in order to comply with, for example, product specifications, it can be effective to use zinc alloy powder containing aluminium and/or indium in addition to calcium and bismuth.

### <Example 3>

In Example 3, the type and the amount of an anionic surfactant (i.e., an anti-corrosive) to be added to a negative electrode were studied.

AA alkaline-manganese batteries (36)-(61) were fabricated by employing the same contents of calcium and bismuth in zinc alloy powder and the same fine-powder percentage of particles with particle sizes of 75 µm or less as those of battery (7) in Example 1 except that the type and the amount of an anionic surfactant in a negative electrode were adjusted as those in the left part of Table 4. The term "added amount" in the left part of Table 4 means (anionic surfactant weight / zinc alloy powder weight) × 100 [% by weight].

To evaluate batteries (36)-(61), DSC pulse discharge test (I) and short-circuit temperature measurement (II) were conducted in the same manner as described in above Evaluation 1. To clarify the difference in effect obtained by changing the type or the amount of an anionic surfactant, in addition to leakage resistance test (III) in Evaluation 1, a leakage resistance test (see, leakage resistance test (IV) described below) was performed under much more stringent conditions than those for leakage resistance test (III).

### (IV) Leakage Resistance Test

Twenty cells of each of undischarged batteries (36)-(61) were prepared, and then were stored for two months at a temperature of 80°C and a relative humidity of 90%. Thereafter, the number of batteries showing leakage out of the 20 cells was counted, thereby obtaining an occurrence index [%] of leakage.

Table 4 shows results of evaluation tests (I)-(IV) at the right part thereof. In Table 4, the short-circuit temperatures are standardized by defining the maximum end-point temperature [°C] of battery (21) in Example 1 as 100.

**[Table 4]**

| Type | Anionic surfactant | Added amount [wt.%] | (I) DSC pulse discharge performance [Number of pulses] | (II) Short-Circuit Temperature [Index] | (III) 60°C90%,1 month Leakage occurrence index [%] | (IV) 80°C 90%,2 months Leakage occurrence index [%] |
|---|---|---|---|---|---|---|
| (36) | C₃H₇-O-PO₃K₂ | 0.1 | 127 | 94 | 0 | 30 |
| (37) | C₄H₉-O-PO₃K₂ | | 127 | 93 | 0 | 0 |
| (38) | C₈H₁₇-O-PO₃K₂ | | 125 | 92 | 0 | 0 |
| (39) | C₁₈H₃₇-O-PO₃K₂ | | 123 | 93 | 0 | 0 |
| (40) | C₂₀H₄₁-O-PO₃K₂ | | 121 | 93 | 0 | 0 |
| (41) | C₈H₁₇-O-PO₃Na₂ | | 114 | 92 | 0 | 0 |
| (42) | C₈H₁₇-O-PO₃H₂ | | 125 | 93 | 0 | 0 |
| (43) | C₈H₁₇-O-SO₃Nₐ | | 127 | 93 | 0 | 0 |
| (44) | C₈H₁₇-SO₃Na | | 126 | 92 | 0 | 0 |
| (45) | C₈H₁₇-O-CH₂CH₂O-PO₃K₂ | | 122 | 91 | 0 | 0 |
| (46) | C₈H₁₇-O-(CH₂CH₂O)₂-PO₃K₂ | | 123 | 94 | 0 | 0 |
| (47) | C₈H₁₇-O-(CH₂CH₂O)₃-PO₃K₂ | | 120 | 95 | 0 | 0 |
| (48) | C₉H₁₇-O-(CH₂CH₂O)₄-PO₃K₂ | | 111 | 93 | 0 | 0 |
| (49) | C₉H₁₇-O-(CH₂CH₂O)₂-PO₃Na₂ | | 122 | 94 | 0 | 0 |
| (50) | C₉H₁₇-O-(CH₂CH₂O)₂-PO₃H₂ | | 123 | 93 | 0 | 0 |
| (51) | C₈H₁₇-O-(CH₂CH₂O)₂-SO₃Na | | 122 | 92 | 0 | 0 |
| (52) | C₈H₁₇-O-PO₃K₂ | 0.002 | 126 | 92 | 0 | 25 |
| (53) | | 0.003 | 126 | 91 | 0 | 0 |
| (54) | | 0.2 | 124 | 90 | 0 | 0 |
| (55) | | 0.3 | 121 | 93 | 0 | 0 |
| (56) | | 0.35 | 112 | 92 | 0 | 0 |
| (57) | C₈H₁₇-O-(CH₂CH₂O)₂-PO₃Na₂ | 0.002 | 124 | 93 | 0 | 30 |
| (58) | | 0.003 | 123 | 93 | 0 | 0 |
| (59) | | 0.2 | 121 | 92 | 0 | 0 |
| (60) | | 0.3 | 120 | 95 | 0 | 0 |
| (61) | | 0.35 | 111 | 95 | 0 | 0 |

Among batteries (36)-(61), batteries (36)-(51) were fabricated under the same conditions except that the type of the anionic surfactant added to the negative electrode differs among the batteries.

The types of anionic surfactants whose general formulas are respectively expressed as R-O-PO₃X₂, R-O-SO₃X, and R-SO₃X, will be described in detail hereinafter.

First, the number of carbons in R constituting the general formula is discussed. Batteries (36)-(40) are batteries in each of which an anionic surfactant whose general formula is expressed as R-O-PO₃K₂ is added to the negative electrode. Only the number of carbons in R differs among these batteries. Among batteries (36)-(40), batteries (37), (38), and (39) in which the number of carbons in R is in the range from 4 to 18, exhibit high performance in evaluation test (I) and high reliability in evaluation tests (II)-(IV). This is considered to be because of the following reasons. When the number of carbons in R of the anionic surfactant is four or more, the repellency of an adsorption layer formed on the zinc powder surface can be sufficiently enhanced. On the other hand, when the number of carbons in R is 18 or less, the difficulty for the anionic surfactant to move in the alkaline electrolyte can be reduced. Consequently, anionic surfactant molecules are readily removed from the zinc powder surface during discharge, and thus do not inhibit discharge reaction. Although hardly presenting obstacles in actual specifications, battery (36) in which the number of carbons in R is three shows a slight decrease in leakage resistance under very stringent conditions, and battery (40) in which the number of carbons in R is 20 shows a slight degradation of DSC pulse discharge performance.

Second, the types of the anionic hydrophilic group and counterions are discussed. Batteries (38), and (41)-(44) are batteries in each of which an anionic surfactant containing R where the number of carbons is eight is added to the negative electrode. The anionic hydrophilic group and counterions are combined in different manners among these batteries. All batteries (38) and (41)-(44) exhibit high performance in evaluation test (I) and high reliability in evaluation tests (II)-(IV). In batteries (41), (43), and (44) in which counterions X are Na, alkyl phosphate (R-O-P0₃²⁻), alkyl sulfate (R-O-S0O⁻), and alkyl sulfonate (R-SO₃⁻) do not show a significant difference in results, and thus any one of R-O-PO₃²⁻, R-O-SO₃⁻, and R-SO₃⁻ may be employed. In batteries (38), (41), and (42) employing R-O-PO₃X₂, elements K, Na, and H do not show a significant difference in results, and thus any one of K, Na, and H can be used as counterions X.

Then, the types of anionic surfactants whose general formulas are respectively expressed as R-O-(CH₂CH₂O)ₙ-PO₃X₂ and R-O-(CH₂CH₂O)ₙ-SO₃X will be described in detail hereinafter.

First, the value of n is discussed. Batteries (45)-(48) are batteries in each of which an anionic surfactant whose general formula is expressed as R-O-(CH₂CH₂O)ₙ-PO₃K₂ (where R = C₈H₁₇) is added to the negative electrode. Only the value of n differs among these batteries. Among batteries (45)-(48), batteries (45), (46), (47) in which n is in the range from one to three show high performance in evaluation test (I) and high reliability in evaluation tests (II)-(IV). This is because of the following reasons. When the anionic surfactant contains an ethylene oxide chain of O-(CH₂CH₂O)ₙ-, i.e., a nonionic hydrophilic group, the degree of adsorption of an anionic surfactant in the zinc powder surface increases as n increases. However, when n is in the range from one to three, both inclusive, the degree of adsorption is appropriate. Consequently, anionic surfactant molecules are readily removed from the zinc powder surface, and thus, do not inhibit discharge reaction. Although hardly presenting obstacles in actual specifications, battery (48) in which n is four shows slight degradation of DSC pulse discharge performance.

Second, the type of salt bonded to an end of an ethylene oxide chain is discussed. Batteries (46) and (49)-(51) are batteries in each of which an anionic surfactant containing an ethylene oxide chain where n is two and also containing an alkyl chain R where the number of carbons is eight is added to the negative electrode. The type of salt bonded to an end of the ethylene oxide chain differs among these batteries. All batteries (46) and (49)-(51) show high performance in evaluation test (I) and high reliability in evaluation tests (II)-(IV). In batteries (49) and (51) in which counterions X are Na, (-PO₃²⁻) and (-SO₃⁻) do not show a significant difference in results, and thus any one of (-PO₃²⁻) and (-SO₃⁻) may be employed. In batteries (46), (49), and (50) using R-O-(CH₂CH₂O)₂-PO₃X₂, elements K, Na, and H do not show a significant difference in results, and thus any one of H, Na, and K can be used as counterions X.

Lastly, the amount of an added anionic surfactant will be discussed in detail hereinafter.

Batteries (52)-(56) are batteries in each of which an anionic surfactant whose general formula is expressed as C₈H₁₇-O-PO₃K₂ is added to the negative electrode. The amount of the anionic surfactant added to the negative electrode differs among these batteries. Batteries (57)-(61) are batteries in each of which an anionic surfactant whose general formula is expressed as C₈H₁₇-O-(CH₂CH₂O)₂-PO₃Na₂ is added to the negative electrode. The amount of an anionic surfactant added to the negative electrode differs among the batteries. Among batteries (52)-(56) and batteries (57)-(61), batteries (53)-(55) and batteries (58)-(60) each containing 0.003% to 0.3%, both inclusive, by weight, of an anionic surfactant with respect to zinc alloy powder, show high performance in evaluation test (I) and high reliability in evaluation tests (II)-(IV). The anionic surfactant is adsorbed to the zinc powder surface and forms an adsorption layer thereon to function as an anti-corrosive. The amount of 0.003% or more, by weight, of the anionic surfactant contained in the zinc alloy powder can provide a sufficient anti-corrosion effect with the anionic surfactant, thereby further reducing corrosive gas. In addition, the amount of 0.3% or less, by weight, of the anionic surfactant can provide an anti-corrosion effect with the anionic surfactant without degradation of DSC pulse discharge performance. Although hardly presenting obstacles in actual specifications, batteries (52) and (57) including a small amount, i.e., 0.002% (less than 0.003%), by weight, of the anionic surfactant, show a slight decrease in leakage resistance under very stringent conditions. Batteries (56) and (61) including a large amount, i.e., 0.35% (more than 0.3%), by weight, of an anionic surfactant, show slight degradation of DSC pulse discharge performance.

### <Example 4>

In Example 4, a nickel-containing alkaline battery containing electrolytic manganese dioxide and nickel oxyhydroxide as positive electrode active materials was studied.

Negative electrodes were formed in the following manner. Zinc alloy powders (N3), (N6), (N8), (N11), (N16), (N19), (N21), (N25), (N26), and (N33) respectively identical to zinc alloy powders (3), (6), (8), (11), (16), (19), (21), (25), and (26) in Example 1 and zinc alloy powder (33) in Example 2, were formed. Then, gelled negative electrodes respectively associated with those zinc alloy powders were formed.

Positive electrodes were formed in the following manner. Nickel oxyhydroxide, electrolytic manganese dioxide, and graphite were mixed together at a weight ratio of 47 : 47 : 6. One part by weight of an electrolyte (36%, by weight, of a potassium hydroxide aqueous solution containing 2%, by weight, of ZnO) was mixed with 100 parts, by weight, of mixture powder. Then, the resultant mixture was uniformly stirred and mixed with a mixer, and was sized to have a uniform grain size. The obtained grain substance was press-formed into a hollow cylindrical shape, thereby forming a positive electrode material mixture pellet. Nickel oxyhydroxide used in this process was obtained by neutralizing a nickel sulfate aqueous solution with alkali to form nickel hydroxide, and chemically oxidizing this nickel hydroxide with a sodium hypochlorite aqueous solution.

The obtained materials were used to produce a AA nickel-containing alkaline battery having a structure illustrated in FIG. 1. Specifically, a plurality of hollow cylindrical positive electrode material mixture pellets 3 having a total weight of 10.4 g were inserted in a positive electrode case 1, and were brought into close contact with the inner surface of the positive electrode case 1 with repressurization. Thereafter, a separator 4 which is a composite nonwoven fabric made of vinylon and lyocell produced by KURARAY CO., LTD., and an insulating cap (i.e., a bottom insulator) 5 were also inserted in the positive electrode material mixture pellets 3. Then, 1.5 g of an electrolyte (i.e., 36%, by weight, of a potassium hydroxide aqueous solution containing 2%, by weight, of ZnO) was poured in the separator 4. After the pouring, the inside of the separator 4 was filled with 5.7 g of a gelled negative electrode 6. Thereafter, a negative electrode current collector 10 formed by integrating a resin sealing plate 7, a bottom plate 8 also serving as a negative electrode terminal, and an insulating washer 9 was inserted in the gelled negative electrode 6. Thereafter, the edge of an opening of the positive electrode case 1 was crimped to the periphery of the bottom plate 8 with an end of the sealing plate 7 interposed therebetween, thereby bringing the opening edge of the positive electrode case 1 into close contact with the periphery of the bottom plate 8. Lastly, the outer surface of the positive electrode case 1 was coated with an external label 11, thereby forming a nickel-containing alkaline battery.

In the foregoing manner, AA nickel-containing alkaline batteries (N3), (N6), (N8), (N11), (N16), (N19), (N21), (N25), (N26), and (N33) respectively associated with zinc alloy powders shown in Table 5 were formed.

Evaluation tests (I)-(III) were performed on these batteries in the same manner as described in Example 1. Table 5 shows the obtained evaluation results. In Table 5, the short-circuit temperatures are standardized by defining the maximum end-point temperature [°C] of comparative battery (N21) as 100.

**[Table 5]**

| Type | Content in zinc alloy powder [wt.%] | | | | Fine-powder percentage [wt.%] | (I) DSC pulse discharge performance [Number of pulses] | (II) Short-circuit temperature [Index] | (III) Leakage occurrence index [%] | 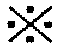 Note |
|---|---|---|---|---|---|---|---|---|---|
| | Ca | Bi | In | Al | | | | | |
| (N3) | 0.0004 | 0.004 | 0 | 0 | 35 | 228 | 99 | 0 | |
| (N6) | 0.003 | 0.01 | 0 | 0 | 35 | 233 | 97 | 0 | |
| (N8) | 0.0048 | 0.012 | 0 | 0 | 35 | 231 | 95 | 0 | |
| (N11) | 0.012 | 0.02 | 0 | 0 | 35 | 225 | 97 | 0 | |
| (N16) | 0.003 | 0.01 | 0 | 0 | 11 | 224 | 98 | 0 | |
| (N19) | 0.003 | 0.01 | 0 | 0 | 45 | 230 | 98 | 0 | |
| (N21) | 0 | 0.01 | 0.01 | 0.01 | 1 | 144 | 100 (Standard) | 0 | For comparison |
| (N25) | 0 | 0.015 | 0.02 | 0 | 75 | 206 | 145 | 55 | |
| (N26) | 0 | 0.01 | 0.03 | 0.005 | 40 | 201 | 144 | 60 | |
| (N33) | 0.0035 | 0.012 | 0.015 | 0.005 | 35 | 227 | 97 | 0 | |

Table 5 shows that among nickel-containing alkaline batteries, batteries (N3), (N6), (N8), (N11), (N16), (N19), and (N33) in which the Ca/Bi ratio in zinc alloy powder was in the range from 0.1 to 0.6, both inclusive, by weight, the Bi content was in the range from 0.004% to 0.02%, both inclusive, by weight, and the fine-powder percentage of particles with particle sizes of 75 µm or less was 11 % or more, by weight, show high performance in evaluation test (I) and high reliability in evaluation tests (II) and (III).

Unlike Example 1 in which the composition of zinc alloy powder and the fine-powder percentage of particles with particle sizes of 75 µm or less are systematically studied, Example 2 in which the aluminium content and the indium content in zinc alloy powder are systematically studied, and Example 3 in which the type and the amount of a surfactant added to the negative electrode are systematically studied, although systematic study was not conducted in Example 4 associated with nickel-containing alkaline batteries, the optimum composition of zinc alloy powder, the optimum fine-powder percentage of particles with particle sizes of 75 µm or less, the optimum aluminium and indium contents in the zinc alloy powder, the optimum type and amount of the surfactant, are expected to be the same as those in alkaline-manganese batteries, based on the results for alkaline-manganese batteries in Examples 1-3.

In Example 3, the amount of an anionic surfactant contained in zinc alloy powder in the case of adding the anionic surfactant to the negative electrode was studied to find an optimum range of the amount. This range is, of course, also applicable to the case of adding the anionic surfactant to an alkaline electrolyte.

In formation of a positive electrode material mixture, electrolytic manganese dioxide and graphite are mixed at a weight ratio of 94 : 6 in Examples 1-3, and nickel oxyhydroxide, electrolytic manganese dioxide, and graphite are mixed at a weight ratio of 47 : 47 : 6 in Example 4. However, the present invention is not limited to these ratios.

### INDUSTRIAL APPLICABILITY

As described above, an alkaline battery according to the present invention can exhibit excellent high-power pulse discharge characteristics as well as reduce a rapid temperature rise occurring in a short circuit and leakage. In other words, the alkaline battery of the present invention can exhibit both high performance and high reliability, and is useful in application for digital still cameras, for example.

## Claims

1. An alkaline battery, comprising:
a positive electrode including a positive electrode active material;
a negative electrode including a negative electrode active material;
a separator; and
an alkaline electrolyte, wherein
the negative electrode active material includes zinc alloy powder containing calcium and bismuth,
the zinc alloy powder contains
from 10% to 60%, both inclusive, by weight, of calcium with respect to bismuth,
from 0.004% to 0.02%, both inclusive, by weight, of bismuth, and
at least 11%, by weight, of particles with particle sizes of 75 µm or less.

2. The alkaline battery of claim 1, wherein the zinc alloy powder includes from 20% to 40%, both inclusive, by weight, of calcium with respect to bismuth.

3. The alkaline battery of claim 1, wherein the zinc alloy powder contains from 0.005% to 0.012%, both inclusive, by weight, of bismuth.

4. The alkaline battery of one of claims 1 to 3, wherein the zinc alloy powder contains 30% to 45%, both inclusive, by weight, of particles with particle sizes of 75 µm or less.

5. The alkaline battery of one of claims 1 to 4, wherein the zinc alloy powder contains from 0.0001% to 0.01%, both inclusive, by weight, of aluminium, and/or from 0.0001 % to 0.02%, both inclusive, by weight, of indium.

6. The alkaline battery of one of claims 1 to 5, wherein one of the negative electrode and the alkaline electrolyte includes, with respect to the zinc alloy powder, from 0.003% to 0.3%, both inclusive, by weight, of at least one material selected from the group consisting of:
anionic surfactants whose general formulas are respectively expressed as R-O-PO₃X₂, R-O-SO₃X, and R-SO₃X (in each of which R is an alkyl group whose general formula is expressed as CₘH₂ₘ₊₁ (4 ≤ m ≤ 18), and X is one of H, Na, and K); and
anionic surfactants whose general formulas are respectively expressed as R-O-(CH₂CH₂O)ₙ-PO₃X₂ and R-O-(CH₂CH₂O)ₘ-SO₃X (in each of which 1 ≤ n ≤ 3, R is an alkyl group whose general formula is expressed as CₘH₂ₘ₊₁ (4 ≤ m ≤ 18), and X is one of H, Na, and K).

7. A AA alkaline-manganese battery, comprising:
a positive electrode including a positive electrode active material;
a negative electrode including a negative electrode active material;
a separator; and
an alkaline electrolyte, wherein
the positive electrode active material includes electrolytic manganese dioxide,
the negative electrode active material includes zinc alloy powder containing calcium and bismuth,
the zinc alloy powder contains
from 10% to 60%, both inclusive, by weight, of calcium with respect to bismuth, and
from 0.004% to 0.02%, both inclusive, by weight, of bismuth, and
when at a discharge ambient temperature of 21°C, a discharge process including sequential steps of 1500-mW pulse discharge performed for two seconds and 650-mW discharge performed for 28 seconds is successively repeated 10 times, then the discharge process is suspended for 55 minutes, and the discharge process repeated 10 times and the suspension for 55 minutes are alternately performed, a total number of pulses measured after a start of the discharge process until a lowest voltage in the 1500-mW pulse discharge reaches 1.05 V is larger than 110.

8. A AA nickel-containing alkaline battery, comprising:
a positive electrode including a positive electrode active material;
a negative electrode including a negative electrode active material;
a separator; and
an alkaline electrolyte, wherein
the positive electrode active material includes nickel oxyhydroxide,
the negative electrode active material includes zinc alloy powder containing calcium and bismuth,
the zinc alloy powder contains
from 10% to 60%, both inclusive, by weight, of calcium with respect to bismuth, and
from 0.004% to 0.02%, both inclusive, by weight, of bismuth, and
when at a discharge ambient temperature of 21°C, a discharge process including sequential steps of 1500-mW pulse discharge performed for two seconds and 650-mW discharge performed for 28 seconds is successively repeated 10 times, then the discharge process is suspended for 55 minutes, and the discharge process repeated 10 times and the suspension for 55 minutes are alternately performed, a total number of pulses measured after a start of the discharge process until a lowest voltage in the 1500-mW pulse discharge reaches 1.05 V is larger than 220.
